Europäisches Patentamt

European Patent Office

Office européen des brevets

(11) Publication number: 0 085 242
A2

# EUROPEAN PATENT APPLICATION

(21) Application number: 82306697.2

(22) Date of filing: 15.12.82

(51) Int. Cl.³: F 16 F 15/12
F 16 D 3/12

(30) Priority: 01.02.82 US 344329

(43) Date of publication of application:
10.08.83 Bulletin 83/32

(84) Designated Contracting States:
DE FR GB IT SE

(71) Applicant: BORG-WARNER CORPORATION
200 South Michigan Avenue
Chicago Illinois 60604(US)

(72) Inventor: Fall, Don Reid
8381 Riverland Drive Apartment No. 1
Sterling Heights Michigan 48078(US)

(74) Representative: Allden, Thomas Stanley et al,
A.A. THORNTON & CO. Northumberland House 303-306
High Holborn
London WC1V 7LE(GB)

(54) Long travel damper with friction lag device.

(57) A vibration damper assembly (10) for use in a torsional coupling between driving and driven members where the damper assembly includes a hub (25) having a pair of oppositely disposed hub arms and a forwardly extending inner flange, a piston plate having a pair of driving members cooperating with the hub arms and having an inner rear-wardly extending annular flange (12), at least one floating equalizer (36 or 37) journalled on the hub, a plurality of damping springs positioned between the arms of the equalizer and the hub arms, and a unidirectional friction lag spring wrapped around the piston plate flange with one end secured in the hub flange.

Fig.1.

# LONG TRAVEL VIBRATION DAMPER
# WITH FRICTION LAG DEVICE

## Description

In the driveline of an automotive vehicle between the engine and the transmission, a torsional coupling conventionally requires a vibration damper to neutralize any torsional vibrations emanating from the vehicle engine which would otherwise cause undesirable characteristics, e.g. impact loads, pulsations, noise, etc., in the transmission and driveline during operation of the vehicle. This is particularly true for a friction clutch utilized in conjunction with a manual transmission.

A conventional torque converter used in combination with an automatic transmission normally hydraulically absorbs the undesirable torsional vibrations, however, with the addition of a lock-up clutch in the torque converter to provide for a direct drive between the impeller and turbine, a vibration damper becomes desirable for the lock-up clutch to overcome undesirable vibrations. A specific long travel damper assembly is shown in U. S. Patent No. 4,188,806 which provides a very low rate, high amplitude deflection. Under certain conditions, a unidirectional frictional damping action may be desired, and the present invention provides this additional damping incorporated in the damper assembly shown in the above-cited patent.

The present invention comprehends the provision of a novel vibration damper assembly for a vehicle clutch, such as a lock-up clutch in a torque converter, which includes a piston plate having a friction facing surface and a pair of inwardly extending drive members or tangs, a hub having a pair of oppositely disposed hub arms cooperating with the drive tangs, a pair of floating equalizers journalled on the hub and having oppositely disposed arms with spring separators mounted therein, a plurality of vibration damper springs interposed between the hub arms and equalizer spring separators, and a unidirectional friction lag means located between the piston plate and the hub.

The present invention also comprehends the provision of a vibration damper assembly for use in a vehicle clutch, such as a torque converter lock-up clutch, wherein a resilient wire is wrapped around a drum formed on the piston plate with one end connected to the hub barrel of the damper assembly. The opposite end of the coiled wire remains free so that the wire will wrap up upon relative rotation in one direction to frictionally engage the drum and provide a unidirectional lag, while in the opposite direction of rotation, the wire coil will relax and slip on the drum.

Further objects of the present invention are to provide a construction of maximum simplicity, efficiency, economy and ease of assembly and operation, and such further objects, advantages and capabilities as will later more fully appear
and are inherently possessed thereby.

One way of carrying out the invention is described in detail below with reference to drawings
which illustrate only one specific embodiment, in
which:-

Figure 1 is a rear elevational view of a
vibration damper assembly embodying the present
invention.

Figure 2 is a cross sectional view taken on
the irregular line 2-2 of Figure 1.

Figure 3 is an enlarged partial perspective
view of a portion of the driving member, hub and
unidirectional friction lag spring.

Figure 4 is a rear elevational view of the
hub member.

Figure 5 is a cross sectional view of the hub
taken on the irregular line 5-5 of Figure 4.

Figure 6 is an enlarged perspective view of a
spring separator utilized in a floating equalizer.

Figure 7 is a partial side elevational view
with portions in cross section of the damper assembly
taken from the left hand side of Figure 1.

Figure 8 is a cross sectional view taken on the irregular line 8-8 of Figure 1.

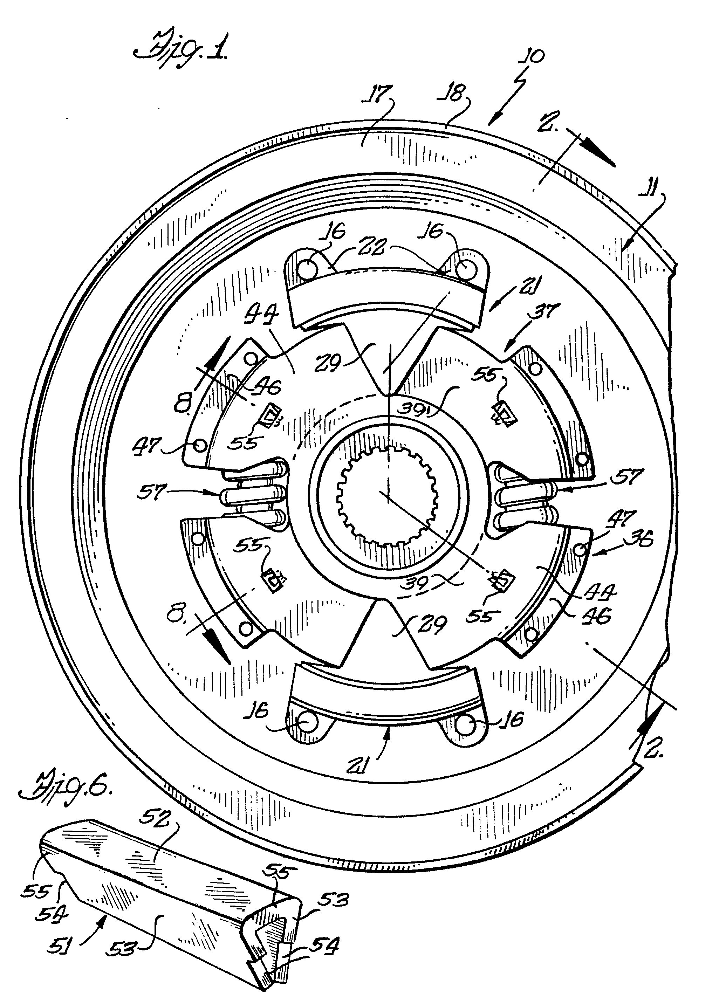

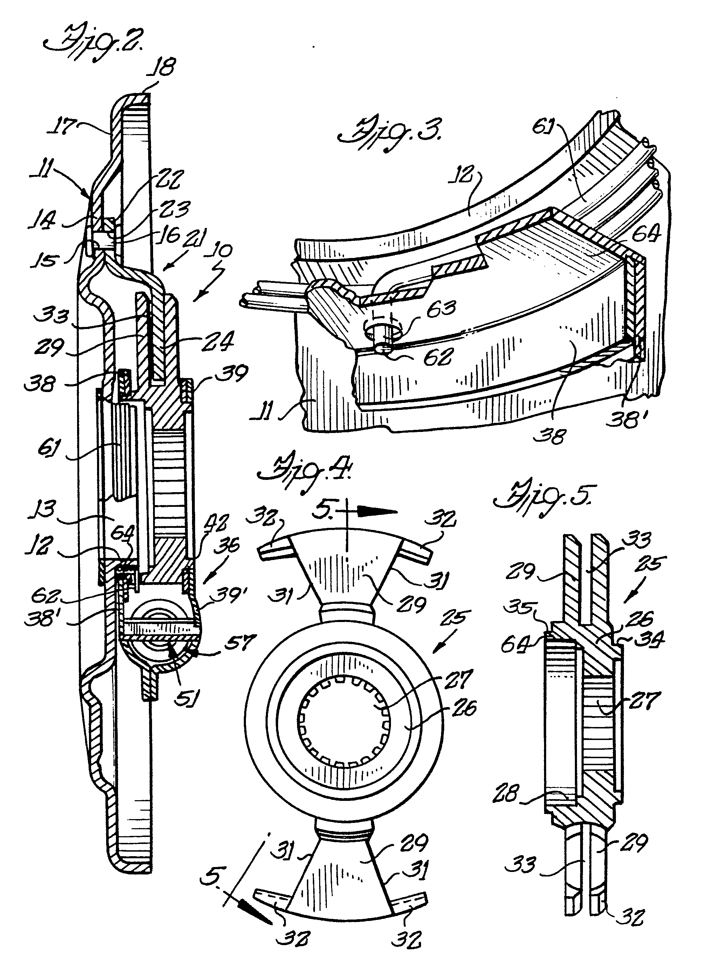

Referring more particularly to the disclosure in the drawings wherein is shown an illustrative embodiment of the present invention, Figures 1 and 2 disclose a vibration damper assembly 10 which may be utilized in a torsional coupling, vehicle clutch for a manual transmission or lock-up clutch in a torque converter, and includes an input member or piston plate 11 of an irregular cross section, as seen in Figure 2, with an inner axially extending peripheral flange 12 forming a drum and defining a central opening 13, an annular ring 14 having openings 15 for rivets 16, and an annular flat outer ring 17 adapted to receive a friction facing thereon; the plate terminating in an annular peripheral flange 18. Although shown as a piston plate for a torque converter lock-up clutch, the input member could terminate in a radial flange adapted to be bolted to a driving shaft or carrying the annular friction facings for a manual transmission clutch.

A pair of drive members 21,21 are secured to the annular ring 14 by the rivets 16, with each drive member having base portions 22 with openings 23 aligned with the drive plate openings 15 and an inwardly extending offset drive tang 24 having inwardly converging edges.

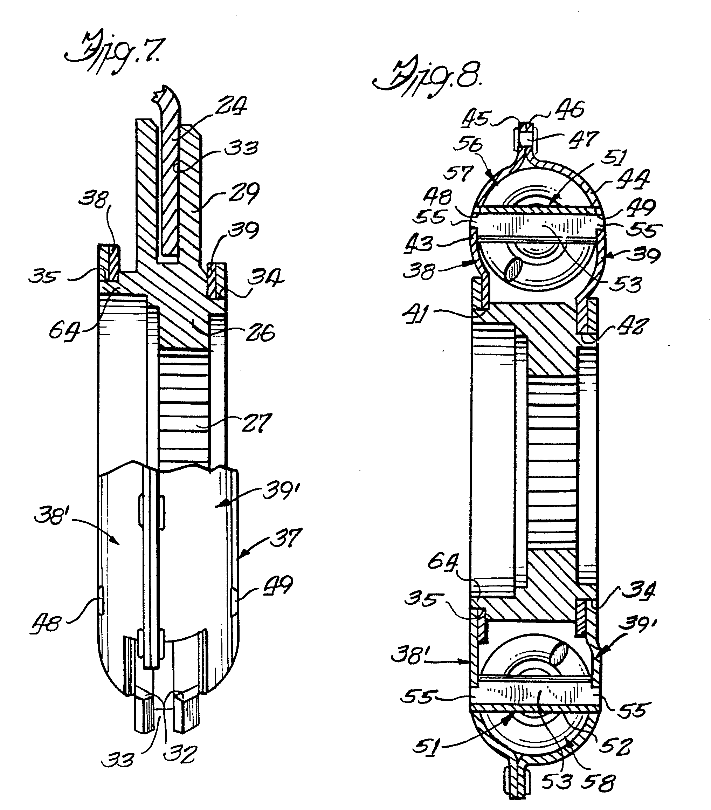

A hub member 25 (Figures 4 and 5) includes a barrel 26 having an internally splined central opening 27 to receive either the splined end of a transmission input shaft or an externally splined surface of a turbine hub in a torque converter (not shown). The opening is provided with an enlarged counterbore 28 at the forward end to concentrically receive the inner flange 12 of the piston plate therein. A pair of oppositely disposed radially extending hub arms 29,29 are integral with the hub barrel and have outwardly diverging edges 31,31 terminating in circumferentially oppositely extending ears 32,32; each arm having a circumferentially extending radial slot 33 formed therein to conformably receive a drive tang 24. Shoulders 34 and 35 are formed on the barrel on the opposite sides of the arms to journal a pair of floating equalizers 36 and 37 thereon.

The equalizers are of substantially identical configuration with the first equalizer including a front plate 38 and a rear plate 39; each plate having a central opening 41 or 42 and a pair of oppositely disposed outwardly extending and inwardly curved arms 43,43 or 44,44 respectively; the arms terminating in peripheral flanges 45 or 46 which abut and are secured together by rivets 47. Each arm includes an opening 48 or 49 receiving the ends of a spring separator 51 which extends between the plates. Each separator is formed of a metal piece folded in the general shape of a triangle as seen in cross section. The second equalizer 37 is formed of plates 38' and 39' which are substantially identical to the plates 38 and 39 of the first equalizer 36.

The plates 38 and 39 of the first equalizer are journalled on the hub barrel shoulders 34 and 35, and the plates 38',39' of the second equalizer 37 are positioned on the shoulders 34 and 35, respectively, outside of the plates 38,39 (see Figure 8). Friction shims (not shown) may be located between the plate 38 or 38' and the barrel and between the plates 38 and 38' or 39 and 39' as necessary to meet the requisite friction lag for the assembly.

Considering the assembly, the curved arms of the equalizers 36 and 37 form spring pockets to receive the ends of three pairs of damper spring sets 56,57,58. Each spring separator 51 is in the form of a triangular sheet metal pin (Figure 6) has a base 52 and sides 53 folded inwardly to substantially abutting position; the sides being cut-away at 54 at each end to form the reduced end 55 projecting into an opening 48 or 49, with the cut-away 54 providing a shoulder preventing axial movement in the floating equalizer. Each separator 51 is located between two adjacent spring sets 55,56 or 56,57 with each spring set abutting one of the inclined sides 53.

To provide additional friction lag in only one direction of rotation, a helical spring 61 is wound around the inner flange 12 of piston plate 11 (Figure 3) with a free end (not shown) and an opposite end 62 bent to extend radially outwardly to project through an opening 63 in the forward flange 64 of the hub barrel 26 formed by the counterbore 28. Thus, when the piston plate 11 is rotated in a counterclockwise direction in the drive mode, the end 62 in the then relatively stationary hub barrel acts to wind the spring and tighten the coils around the flange 12 of the piston plate to provide frictional drag or damping in the drive direction of the damper. On the other hand, in the coast mode, rotation of the hub barrel relative to the piston plate acts to unwind the spring and disengage the flange 12 so there is no friction lag. Thus, the action of the spring 61 in providing friction damping is unidirectional. The remaining damper structure operates in the manner set forth in U. S. Patent No. 4,188,806.

## CLAIMS

1. A vibration damper assembly (10) to transmit torque between driving and driven members, comprising an input member (11) operatively connected with torque input means, a hub (25) operatively connected to torque output means and having at least two radially extending arms (29), at least one floating equalizer (36 or 37) journalled on said hub, said equalizer having at least two generally radially extending arms (43,44) with a spring separator (51) in each arm, resilient means (56,57,58) interposed between said hub arms (29) and equalizer arms (43,44) and abutting said spring separators (51), and drive means (21) operative connected to said input member and extending into the path of said resilient means, the improvement comprising resilient friction lag means (61) operatively connected between said input means and said hub to provide friction damping in one direction of rotation of said hub.

2. A vibration damper assembly as set forth in Claim 1, in which said input member (11) includes a rearwardly extending inner annular flange (12) and said hub (25) includes a forwardly extending inner annular flange (64) receiving said input member flange concentrically therein, said friction lag means includes a helical coil spring (61) wound around said input member flange (12) and anchored to said hub flange (64).

3.  A vibration damper assembly as set forth in Claim 2, in which said friction lag spring (61) has a free end and an opposite end (62) bent radially outwardly, said hub flange (64) having an opening (63) receiving said bent spring end.

4.  A vibration damper assembly as set forth in Claim 3, in which said friction lag spring (61) is coiled so as to wind tightly around said input member flange (12) in the drive direction and to unwind and slip on said input member flange in the coast direction.

Fig.1.

Fig.6.

Fig.2.

Fig.3.

Fig.4.

Fig.5.

Fig.7.

Fig.8.